**Europäisches Patentamt**

**European Patent Office**

**Office européen des brevets**

(19)

(11) **EP 1 115 243 A2**

(12) **EUROPEAN PATENT APPLICATION**

| | |
|---|---|
| (43) Date of publication:<br>**11.07.2001 Bulletin 2001/28** | (51) Int Cl.$^7$: **H04M 11/06** |

(21) Application number: **01100455.3**

(22) Date of filing: **08.01.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Ishikawa, Hajime, c/o NEC Corporation Tokyo (JP)** |
| (30) Priority: **07.01.2000 JP 2000001328** | (74) Representative: **Glawe, Delfs, Moll & Partner Patentanwälte Postfach 26 01 62 80058 München (DE)** |
| (71) Applicant: **NEC CORPORATION Tokyo (JP)** | |

(54) **Method of carrying out multiplex transmission of subscriber service signals**

(57)     A method of carrying out multiplex transmission of a subscriber service signal, includes the steps of (a) converting a subscriber service signal including x digital subscriber line (xDSL) signals, from an analog form to a digital form, (b) storing a plurality of thus converted sampling digital signals (3-1 to 3-3) and control signals (5-1 to 5-3) into a first multiple signal, and multiplexing in time-sharing a plurality of the thus produced first multiple signals to thereby produce a second multiple signal, and (c) transmitting the second multiple signal.

FIG. 3

EP 1 115 243 A2

## Description

## BACKGROUND OF THE INVENTION

## FIELD OF THE INVENTION

The invention relates to a method of transmitting a subscriber service signal including an xDSL (x digital subscriber line) signal, and more particularly to a method of carrying out multiplex transmission of a plurality of subscriber service signals.

## DESCRIPTION OF THE PRIOR ART

Recently, a xDSL (x digital subscriber line) system has attracted attention. The xDSL system transmits digital data at megabits per a second through an already built telephone network.

However, since the xDSL system uses a frequency band broader than 1 MHz in digital data transmission, a data-transmission distance in the xDSL system is strictly limited due to attenuation of a signal and/or noises. Hence, it is expected to partially form a data-transmission path of an optical fiber in order to lengthen a data-transmission distance or expand a service area of the xDSL system.

For instance, Japanese Patent Application No. 11-111417 has suggested the xDSL system in which a subscriber service signal including xDSL signals is transmitted through an optical fiber.

Hereinbelow is explained the xDSL system suggested in the above-mentioned application. However, the explanation made hereinbelow does not mean that the applicant admits that the application constitutes prior art to the present invention. The explanation is made only for the purpose of better understanding of the present invention.

In the xDSL system suggested in Japanese Patent Application No. 11-111417, a subscriber and a remote node are connected to each other through a telephone line. A subscriber service signal is transmitted through the telephone line. A terminal station and the remote node are connected to each other through an optical fiber. A subscriber service signal is converted at the remote node from an analog form to a digital form, and the thus converted sampling digital signal is transmitted to the terminal station.

In the suggested xDSL system, a subscriber service signal is A/D-converted and then transmitted to the terminal station without being terminated at the remote node. Accordingly, it is not necessary for the remote node to carry out complicated termination process, ensuring simplification in a structure of the remote node. As a result, it is possible to fabricate the remote node in a smaller size and reduce power consumption in the remote node.

In the suggested xDSL system, a plurality of subscriber service signals are multiplexed in the remote node. However, the application does not explain how the subscriber service signals are multiplexed, in detail.

One of methods of multiplexing a plurality of subscriber service signals is suggested in Japanese Patent Publication No. 7-56961. Fig. 1 illustrates a frame used in the method suggested in the Publication.

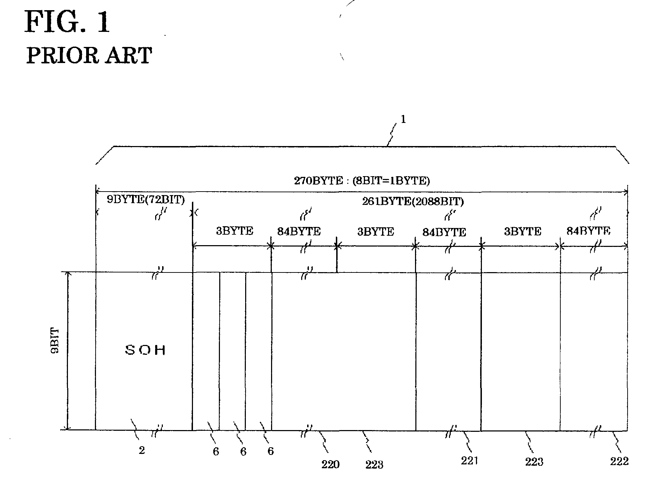

With reference to Fig. 1, the suggested method uses a STM-1 frame 1 having a size of vertically 9 bits X horizontally 270 bytes (2160 bits). First to ninth bytes constitute a section overhead (SOH) 2, and tenth to last or 270th bytes store subscriber service signals.

The STM-1 frame 1 includes three virtual containers 220, 221 and 222, and two staff regions 223 in the tenth to last bytes. The virtual containers 220, 221 and 222 store subscriber service lines therein. The staff regions 223 are sandwiched between the virtual containers 220, 221 and 222, and are used for adjusting a transmission rate. A V-channel obtained by A/D-converting a telephone signal or 2B-channel + D-channel in an ISDN signal is mapped in the virtual containers 220, 221 and 222.

However, the conventional methods of multiplexing subscriber service signals, including the method suggested in the above-mentioned Japanese Patent Publication No. 7-56961, were developed for multiplexing subscriber service signals having relatively low rates, such as a telephone signal or ISDN signal.

Hence, it is quite different or almost impossible to apply the conventional methods of multiplexing subscriber service signals, to the method suggested in the above-mentioned Japanese Patent Application No. 11-111417 in which a subscriber service signal including xDSL signals is A/D-converted prior to transmission thereof, for the reasons set forth hereinbelow.

A xDSL signal is an analog signal using a frequency band equal to or broader than 1 MHz. A bit solution of about 10 bits to 12 bits and a sampling rate of at least 2.2 mega-sample per second (MS/s) are required to A/D-convert the xDSL signal. Accordingly, it is necessary to prepare a band of at least about 20 Mb/s for each one of the xDSL signals. This means that it is impossible to apply the conventional methods in which a band of 64 kb/s to 128 kb/s is applied to a subscriber, to the method suggested in the above-mentioned Japanese Patent Application No. 11-111417.

In addition, the optimal bit solution becomes unequal to a multiple of 8 bits. Accordingly, the conventional frame in which a subscriber service signal is stored into a pay-load in every 8 bits is accompanied with a problem that the frame does not match well to the method in which a sampling digital signal having a broad band is stored, such as the method suggested in Japanese Patent Application No. 11-111417, and resultingly, steps of processing a subscriber service signal when the signal is to be stored become unavoidably complicated.

Japanese Unexamined Patent Publication No. 10-285120 has suggested a method of transmitting a subscriber service signal. In the method, a communication unit arranged in a station is connected to a plurality of subscriber communication units through an optical fiber transmission path which branches via star couplers. A signal is interactively transmitted between the station communication unit and the subscriber communication units in time compression multiplexing (TCM). A go-down signal transmitted from the station communication unit to the subscriber communication units is an optical signal comprising a transmission signal in accordance with TCM to which a plurality of transmission signals is multiplexed in time-sharing.

However, the above-mentioned problem remains unsolved even in the method suggested in the Publication No. 10-285120.

## SUMMARY OF THE INVENTION

In view of the above-mentioned problems in the conventional method of multiplexing subscriber service signals, it is an object of the present invention to provide a method of capable of readily and effectively multiplexing A/D converted sampling digital signals.

In one aspect of the present invention, there is provided a method of carrying out multiplex transmission of a subscriber service signal, comprising the steps of (a) converting a subscriber service signal including x digital subscriber line (xDSL) signals, from an analog form to a digital form, (b) storing a plurality of thus converted sampling digital signals and control signals into a first multiple signal, and multiplexing in time-sharing a plurality of the thus produced first multiple signals to thereby produce a second multiple signal, and (c) transmitting the second multiple signal.

In accordance with the method, even if a sampling digital signal has a band equal to or broader than 10 Mb/s, it would be possible to store the sampling digital signals at the stage when the sampling digital signals are at a relatively low rate, before the sampling digital signals are multiplexed to a transmission signal having a relatively high rate. As a result, a sampling digital signal can be readily multiplexed to a transmission signal having a relatively high rate.

The method may further include the step (d) encoding the second multiple signal, wherein the step (d) is to be carried out between the steps (b) and (c).

It is preferable that the first multiple signal is encoded in the step (b) before being multiplexed in time-sharing.

It is preferable that the first multiple signal has a frame structure including frames arranged in a certain cycle, and wherein a sampling digital signal of each of subscribers is assigned a time slot at a predetermined position in the frame, and is always stored in the assigned time slot.

Thus, it would be possible to simplify the steps of multiplexing a sampling digital signal, and hence, it would be also possible to simplify an apparatus for carrying out the method.

It is preferable that the first multiple signal is comprised of a packet comprised of a header and a pay-load, and a sampling digital signal of each of subscribers is stored into the pay-load in a predetermined order.

Thus, it would be possible to simplify the steps of multiplexing a sampling digital signal, and hence, it would be also possible to simplify an apparatus for carrying out the method.

It is preferable that the first multiple signal is comprised of either a frame comprised of an overhead and a pay-load or a packet comprised of a header and a pay-load, and the control signal is stored into a vacancy in the overhead or the header.

Thus, it would be possible to use all pay-loads in the first multiple signal for storing a sampling digital signal thereinto. As a result, a sampling digital signal can be effectively stored.

It is preferable that the first multiple signal is comprised of either a frame comprised of an overhead and a pay-load or a packet comprised of a header and a pay-load, the control signal is stored together with the sampling digital signal into the pay-load, and the control signal is periodically inserted into the sampling digital signal in the pay-load.

Thus, it would be possible to reduce a buffer capacity in which the control signal is to be stored before stored into the first multiple signal.

It is preferable that the first multiple signal is comprised of either a frame comprised of an overhead and a pay-load or a packet comprised of a header and a pay-load, the control signal is stored together with the sampling digital signal into the pay-load, and the control signal is stored in the pay-load into successive areas separated from the sampling digital signal.

Thus, the control signals could be readily stored into the first multiple signal.

It is preferable that the first multiple signal is comprised of either a frame comprised of an overhead and a pay-load or a packet comprised of a header and a pay-load, the control signal is stored together with the sampling digital signal into the pay-load, and each bit in the control signal is added to a bit in the sampling digital signal and is stored into the pay-load.

Thus, it would be possible to transmit or receive the control signal and the sampling digital signal together, both of which are directed to a subscriber.

It is preferable that the first multiple signal has the same transmission rate as a transmission rate of STM-1 or STM-4 in synchronous digital hierarchy (SDH).

Thus, it would be possible to obtain compatibility with circuits based on SDH, ensuring reduction in fabrication costs in an apparatus for carrying out the method.

It is preferable that the first multiple signal uses a frame having a cycle of 125 μs.

Thus, it would be possible to match the first and second multiple signals to a voice signal having a cycle

of 125 μs.

It is preferable that the first multiple signal uses A1 byte (1111011) and A2 byte (00101000) used in synchronous digital hierarchy (SDH), as a frame heading byte.

Thus, it would be possible to obtain compatibility with circuits based on SDH, ensuring reduction in fabrication costs in an apparatus for carrying out the method.

It is preferable that the first multiple signal has a frame having the same structure as a structure of STM-1 or STM-4 in synchronous digital hierarchy (SDH), and the sampling digital signal and the control signal are stored into a pay-load in the frame.

Thus, it would be possible to obtain compatibility with SDH, ensuring reduction in fabrication costs in an apparatus for carrying out the method.

It is preferable that the subscriber service signal is A/D converted at a sampling rate of 8.832, 4.416 or 2.208 mega-sample/second (MS/s), and at a bit solution of 10, 11 or 12 bits.

Thus, it would be possible to readily store the subscriber service signal including the xDSL signals, into a frame in SDH, even if the subscriber service signal has a band equal to or broader than 1 MHz.

It is preferable that the first multiple signal is transmitted at 100 Mb/s, 125 Mb/s, 1Gb/s or 1.25 Gb/s.

Thus, it would be possible to obtain compatibility with Ethernet circuits defined in accordance with IEEE 802.3, ensuring reduction in fabrication costs in an apparatus for carrying out the method.

It is preferable that the first multiple signal uses an Ether packet defined in IEEE 802.3 LAN.

Thus, it would be possible to obtain compatibility with Ethernet circuits defined in accordance with IEEE 802.3, ensuring reduction in fabrication costs in an apparatus for carrying out the method.

It is preferable that the subscriber service signal is A/D converted at a sampling rate of 8.832, 4.416 or 2.208 mega-sample/second (MS/s), and at a bit solution of 10, 11 or 12 bits.

Thus, it would be possible to readily store the subscriber service signal including the xDSL signals, into a packet, even if the subscriber service signal has a band equal to or broader than 1 MHz.

It is preferable that the second multiple signal has the same transmission rate as a transmission rate of STM-m in synchronous digital hierarchy (SDH) wherein m is an integer equal to or greater than 1.

Thus, it would be possible to multiplex the first multiple signal having the same transmission rate as a transmission rate of STM-1 and STM-4, in time-sharing, and to obtain compatibility with circuits based on SDH, ensuring reduction in fabrication costs in an apparatus for carrying out the method.

It is preferable that the second multiple signal uses a frame having a cycle of 125 μs.

Thus, it would be possible to multiplex the first multiple signal having a cycle of 125 μs, in time-sharing, and to obtain compatibility with circuits based on SDH, ensuring reduction in fabrication costs in an apparatus for carrying out the method.

It is preferable that the second multiple signal uses A1 byte (1111011) and A2 byte (00101000) used in synchronous digital hierarchy (SDH), as a frame heading byte.

Thus, it would be possible to obtain compatibility with a SDH frame using A1 bytes and A2 bytes as a heading byte.

It is preferable that the second multiple signal is based on synchronous digital hierarchy (SDH), and that the method further includes the step of storing the first multiple signal based on synchronous digital hierarchy (SDH).

Thus, it would be possible to fabricate an apparatus for carrying out the method, in reduced costs, which apparatus matches well with the first multiple signal based on SDH and has compatibility with SDH.

It is preferable that the second multiple signal is produced by bit-multiplexing or byte-multiplexing a plurality of the first multiple signals in time-sharing, and that the method further includes the step of inserting an identifier into at least one of the first multiple signals in order to identify each of the first multiple signals.

Thus, it would be possible to readily multiplex the first multiple signal.

It is preferable that the second multiple signal is produced by bit-multiplexing or byte-multiplexing a plurality of the first multiple signals in time-sharing, and that the method further includes the step of inverting at least a part of frame synchronization byte of the first multiple signals in order to identify each of the first multiple signals.

Thus, it would be possible to multiplex the first multiple signal without necessity of altering the control signals.

It is preferable that the second multiple signal is transmitted at 1Gb/s, 1.25 Gb/s, 10 Gb/s or 12.5 Gb/s.

Thus, it would be possible to obtain compatibility with Ethernet circuits defined in accordance with IEEE 802.3, ensuring reduction in fabrication costs in an apparatus for carrying out the method.

It is preferable that the second multiple signal is produced by bit-multiplexing or byte-multiplexing the first multiple signal in time-sharing, and further comprising the step of inserting an identifier, in place of NULL indicative of no signal status, into at least one of the first multiple signals in order to identify each of the first multiple signals.

Thus, it would be possible to readily multiplex the first multiple signal.

There is further provided a method of carrying out multiplex transmission of a subscriber service signal, including the steps of (a) converting a subscriber service signal including x digital subscriber line (xDSL) signals, from an analog form to a digital form, (b) storing a plurality of thus converted sampling digital signals and control signals into a first multiple signal, and (c) transmitting the first multiple signals.

The method makes it easy for a recipient to take out the sampling digital signal.

It is preferable that the first multiple signals are encoded before transmitted in step (c).

It is preferable that the first multiple signal has the same transmission rate as a transmission rate of STM-m in synchronous digital hierarchy (SDH) wherein m is an integer equal to or greater than 1, and includes A1 byte (1111011) and A2 byte (00101000) both having a cycle of 125 μs, at a head of a frame.

Thus, it would be possible to obtain compatibility with circuits based on SDH, ensuring reduction in fabrication costs in an apparatus for carrying out the method.

It is preferable that the first multiple signal uses a frame of STM-m in synchronous digital hierarchy (SDH) wherein m is an integer equal to or greater than 1.

Thus, it would be possible to obtain compatibility SDH, ensuring reduction in fabrication costs in an apparatus for carrying out the method.

It is preferable that the first multiple signal uses an Ether packet defined in IEEE 802.3 LAN.

Thus, it would be possible to obtain compatibility with Ethernet circuits defined in accordance with IEEE 802.3, ensuring reduction in fabrication costs in an apparatus for carrying out the method.

It is preferable that the first multiple signal is transmitted at 1Gb/s, 1.25 Gb/s, 10 Gb/s or 12.5 Gb/s.

Thus, it would be possible to obtain compatibility with Ethernet circuits defined in accordance with IEEE 802.3, ensuring reduction in fabrication costs in an apparatus for carrying out the method.

There is still further provided a method of carrying out multiplex transmission of a subscriber service signal, including the steps of (a) converting a subscriber service signal including x digital subscriber line (xDSL) signals terminated by an xDSL modem unit, from an analog form to a digital form, (b) multiplexing a plurality of thus converted sampling digital signals and control signals, and (c) transmitting the signals, the subscriber service signal being converted from an analog form to a digital form at a first sampling rate, a ratio between the first sampling rate and a sampling rate of the xDSL modem unit being equal to an integer.

In accordance with the method, it would be possible to input the sampling digital signal directly to a digital signal interface of the xDSL modem.

It is preferable that the first sampling rate is equal to 1.104 MS/s multiplied by an integer.

A sampling rate in a xDSL modem is generally a multiple of 1.104 MS/s. Hence, it would be possible to have compatibility with the sampling rate.

As mentioned above, the present invention presents the advantage that a subscriber service signal can be readily multiplexed or demultiplexed.

The reason is as follows. In the method in accordance with the present invention, a sufficient band is prepared for a subscriber service signal. The multiple signal includes a pay-load thereof having a bit solution at which a subscriber service signal is A/D converted. Hence, it would be possible to simplify steps of multiplexing a sampling digital signal obtained by A/D converting the subscriber service signal. As a result, it would be possible to simplify a structure of an apparatus in which the method in accordance with the present invention is carried out.

## BRIEF DESCRIPTION OF THE DRAWINGS

Fig. 1 illustrates a format of a structure of a multiple signal in a conventional method of multiplexing a signal.

Fig. 2 is a block diagram of a communication system to which the present invention is applied.

Fig. 3 illustrates a format of a structure of a first multiple signal in accordance with the first embodiment of the present invention.

Fig. 4 illustrates a format of a structure of a second multiple signal in accordance with the first embodiment of the present invention.

Fig. 5 illustrates a format of a structure of a first multiple signal in accordance with the second embodiment of the present invention.

Fig. 6 illustrates a format of a structure of a second multiple signal in accordance with the second embodiment of the present invention.

Fig. 7 illustrates a format of a structure of a first multiple signal in accordance with the third embodiment of the present invention.

Fig. 8 illustrates a format of a structure of a first multiple signal in accordance with the fourth embodiment of the present invention.

Fig. 9 illustrates a format of a structure of a first multiple signal in accordance with the fifth embodiment of the present invention.

Fig. 10 illustrates a format of a structure of a second multiple signal in accordance with the fifth embodiment of the present invention.

Fig. 11 illustrates a format of a structure of a first multiple signal in accordance with the sixth embodiment of the present invention.

Fig. 12 illustrates a format of a structure of a second multiple signal in accordance with the sixth embodiment of the present invention.

Fig. 13 illustrates a format of a structure of a first multiple signal in accordance with the seventh embodiment of the present invention.

Fig. 14 illustrates a format of a structure of a first multiple signal in accordance with the eighth embodiment of the present invention.

## DESCRIPTION OF THE PREFERRED EMBODIMENTS

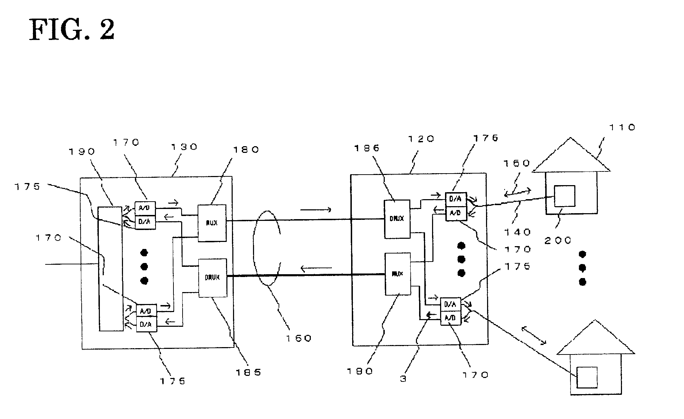

Fig. 2 is a block diagram of a system to which the method in accordance with the present invention is applied.

In the system, a terminal 200 in a subscriber's house 110 is connected to a remote node 120 through a telephone line 140. A subscriber service signal 150 is transmitted between the terminal 200 and the remote node 120 through the telephone line 140. The remote node 120 is connected to a terminal station 130 through an optical fiber cable 160.

A subscriber service signal 150 is grouped into a go-up signal and a go-down signal at the remote node 120. A go-up signal is converted from an analog form to a digital form by an A/D converter 170. A go-down signal is converted from a digital form to an analog form by a D/A converter 175.

A sampling digital signal based on the A/D-converted go-up signal is multiplexed with sampling digital signals of other subscriber service signals in a MUX circuit 180, and then, is converted into an optic signal, which is thereafter transmitted to the terminal station 130 from the remote node 120.

The terminal station 130 converts a received optic signal into an electric signal, which is then separated into individual sampling digital signals by a DMUX circuit 185. The thus separated sampling digital signals are converted into an original subscriber service signal by a D/A converter 175, and the subscriber service signal is then input into a subscriber line terminator 190.

A go-down signal transmitted from the subscriber line terminator 190 is A/D-converted in the A/D converter 170 into a sampling digital signal. A plurality of sampling digital signals based on the go-down signals are multiplexed with one another in the MUX circuit 180 into an optical signal. The thus produced optical signal is transmitted to the remote node 120 from the terminal station 130.

The remote node 120 converts the received optical signal into an electric signal, which is then separated into individual sampling digital signals in the DMUX circuit 185. Then, the sampling digital signals are D/A-converted y the D/A converter 175, and resultingly, turned into original subscriber service signals.

The subscriber service signals are multiplexed in the MUX circuit 180 in line with the method in accordance with the first embodiment.

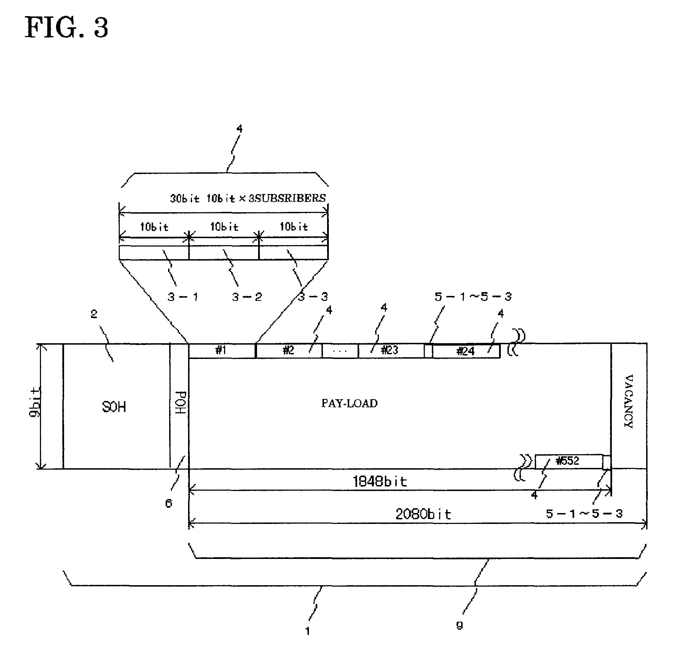

Fig. 3 illustrates a structure of the first multiple signal in the first embodiment.

There are used the first and second multiple signals in the first embodiment. The first multiple signal is comprised of a SDH frame, and the second multiple signal is produced by bit-multiplexing the first multiple signal in time-sharing.

The first multiple signal is comprised of a STM-1 frame 1 in SDH. The STM-1 frame 1 in SDH is comprised of a section overhead (SOH) 2 having a size of vertically 9 bits X horizontally 72 bits, a pass overhead (POH) 6 having a size of vertically 9 bits X horizontally 8 bits, and a pay-load 9 having a size of vertically 9 bits X horizontally 2080 bits.

The pay-load 9 stores therein three sampling digital signals 3-1, 3-2 and 3-3 obtained by A/D-converting three subscriber service signals, and three control signals 5-1, 5-2 and 5-3 associated with the subscribers. A sampling digital signal in the first embodiment has a bit solution of 10 bits.

The control signal includes information obtained by monitoring each of subscribers' lines, such as whether a receiver is hooked on or off, and a signal for controlling a subscriber line, such as a command for ringing a bell indicative of receipt of a call.

A sampling data block 4 is a block in which the sampling digital signals 3-1, 3-2 and 3-3 are stored in a predetermined order after they are multiplexed. In the first embodiment, the sampling data block 4 is constituted of 30 bits.

The pay-load 9 has an area in which control signals each having three bits, associated with the 23 sampling data blocks 4, are to be stored. Control signals 5-1, 5-2 and 5-3 are stored in the area. The 552 sampling data blocks 4 and the 24 controls signals are stored in an area having a size of vertically 9 bits $\times$ horizontally 1848 bits. Accordingly, a subscriber service signal is stored 552 times in a predetermined position in the STM-1 frame 1 having a cycle of 125 µs. Hence, a sampling rate is calculated as follows.

$$125/552 = 4.416$$

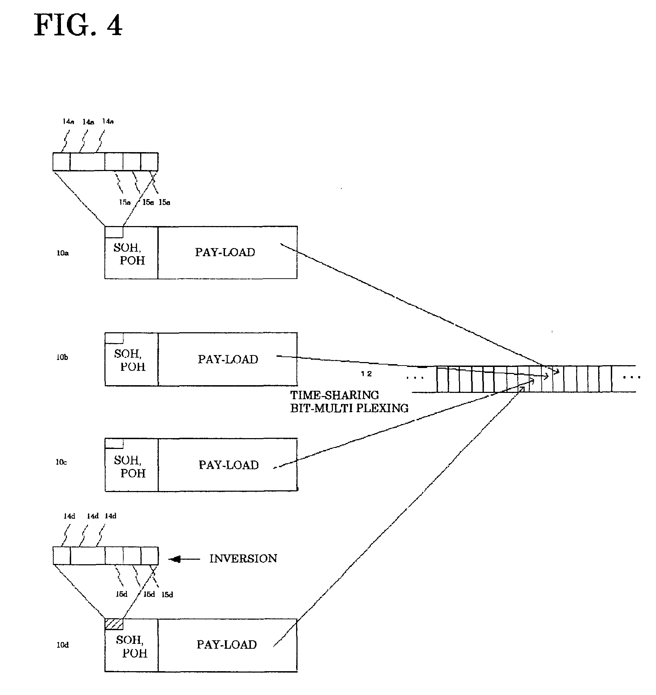

Fig. 4 illustrates a structure of a second multiple signal 12 in the first embodiment.

In the first embodiment, the second multiple signal 12 is produced by bit-multiplexing four first multiple signals 10a, 10b, 10c and 10d in time-sharing. That is, the first multiple signals 10a, 10b, 10c and 10d are stored in turn in a bit time slot of the second multiple signal 12.

However, since the first multiple signals 10a to 10d have no identifiers, it would be impossible to identify the first multiple signals 10a to 10d when the second multiple signal 12 is separated into the first multiple signals 10a to 10d.

Hence, the first multiple signals 10a to 10d are identified as follows.

Each of the first multiple signals 10a to 10d has three A1 bytes 14a, 14b, 14c and 14d and three A2 bytes 15a, 15b, 15c and 15d, respectively, at a head of the overhead. Those A1 and A2 bytes indicate a head of the frame. Among those bytes, the three A1 bytes 14d and the three A2 bytes 15d in the first multiple signal 10d are inverted with respect to their signs. The thus inverted bytes act as an identifier for identifying the first multiple signals 10a, 10b, 10c and 10d.

The first multiple signals 10a, 10b, 10c and 10d are multiplexed in this order by every bit to thereby constitute the second multiple signal 12.

A signal recipient first separates the second multiple signal 12 into the four first multiple signals 10a, 10b, 10c and 10d. Among the four first multiple signals 10a, 10b, 10c and 10d, a signal having both the three inverted A1 bytes and the three inverted A2 bytes at a head of the frame is judges as the first multiple signal 10d.

The first multiple signals 10a to 10c are identified as follows. A signal having been multiplexed prior to the first multiple signal 10d by one signal is judged as the first multiple signal 10c. A signal having been multiplexed prior to the first multiple signal 10d by two signals is judged as the first multiple signal 10b. A signal having been multiplexed prior to the first multiple signal 10d by three signals is judged as the first multiple signal 10a.

Thus, all the first multiple signals 10a, 10b, 10c and 10d can be identified, and hence, it would be possible to separate the second multiple signal 12 into individual subscriber service signals.

A specific bit pattern may be used as an identifier in place of the inverted signs. When a specific pattern is used as an identifier, it is possible to insert different identifiers each comprised of a bit pattern different from one another, into the first multiple signals, in place of the A1 and A2 bytes.

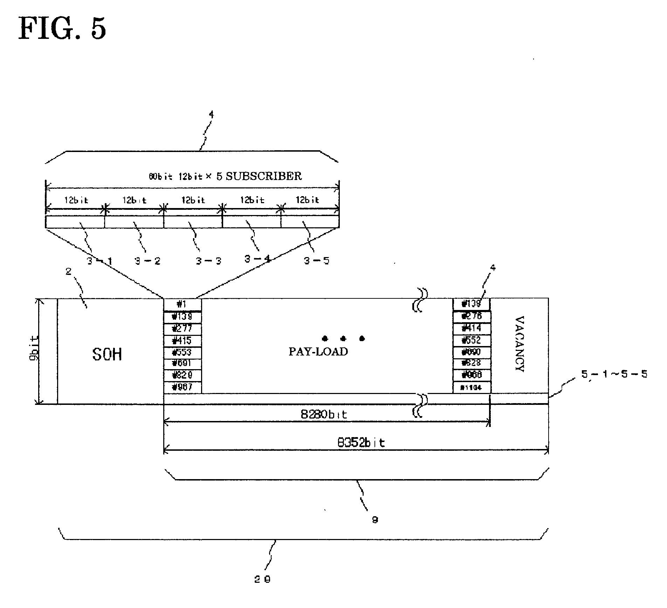

Fig. 5 illustrates a structure of the first multiple signal in the second embodiment.

In the second embodiment, both the first and second multiple signals have a structure based on SDH.

The first multiple signal is comprised of a STM-4 frame 29 based on SDH, and stores subscriber service signals associated with five subscribers, in an area other than SOH 2.

Each of the subscribe service signals is A/D-converted with a bit solution of 12 bits into a sampling digital signal. Sampling digital signals 3-1, 3-2, 3-3, 3-4 and 3-5 associated with five subscribers are multiplexed to thereby form sampling data blocks 4.

The 138 sampling data blocks 4 are stored in one row in an area having a size of vertically 8 bits × horizontally 8280 bits in the STM-4 frame 29. That is, totally 1104 sampling data blocks 4 are stored in the area (138 × 8 = 1104).

Accordingly, each of the subscribe service signals is A/D-converted at a sampling rate of 8.832 MS/s in the second embodiment (1104/125 = 8.832).

Control signals 5-1, 5-2, 5-3, 5-4 and 5-5 are stored in a row which is not used to store the sampling data blocks 4 therein.

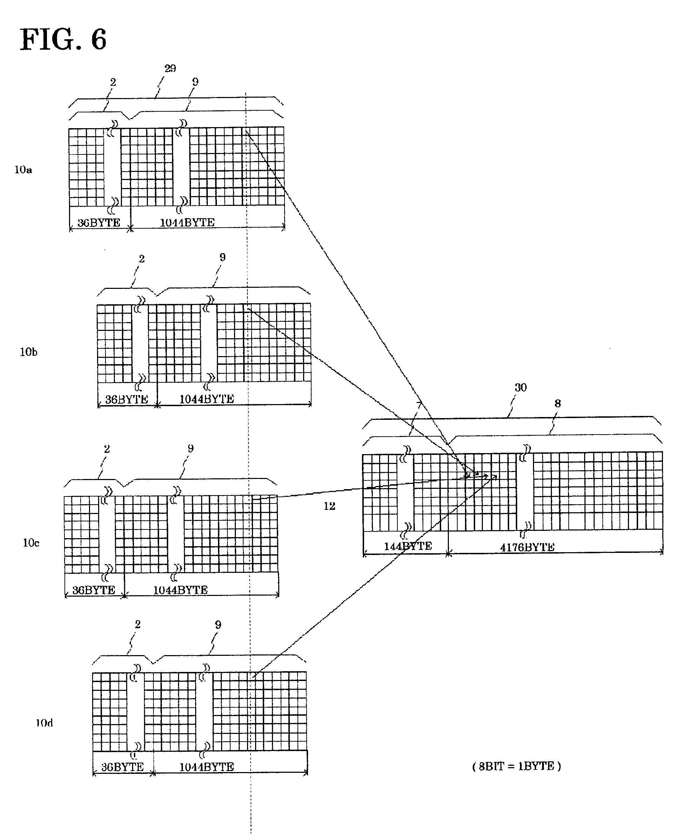

Fig. 6 illustrates a structure of a second multiple signal 12 in the second embodiment.

The second multiple signal 12 in the second embodiment is comprised of a STM-16 frame 30, and is formed by SDH-multiplexing a first multiplexing.

As illustrated in Fig. 5, first multiple signals 10a, 10b, 10c and 10d are all comprised of the STM-4 frame 29. It is not always necessary to synchronize phases of those frames with one another.

Every byte in the pay-load 9 in each of the first multiple signals 10a, 10b, 10c and 10d is multiplexed in time-sharing in the condition that 8 bits constitute one byte, and is stored in a pay-load 8 in the second multiple signal 12, that is, the STM-16 frame 30.

A section overhead (SOH) 7 in the STM-16 frame 30 is rewritten to a new one.

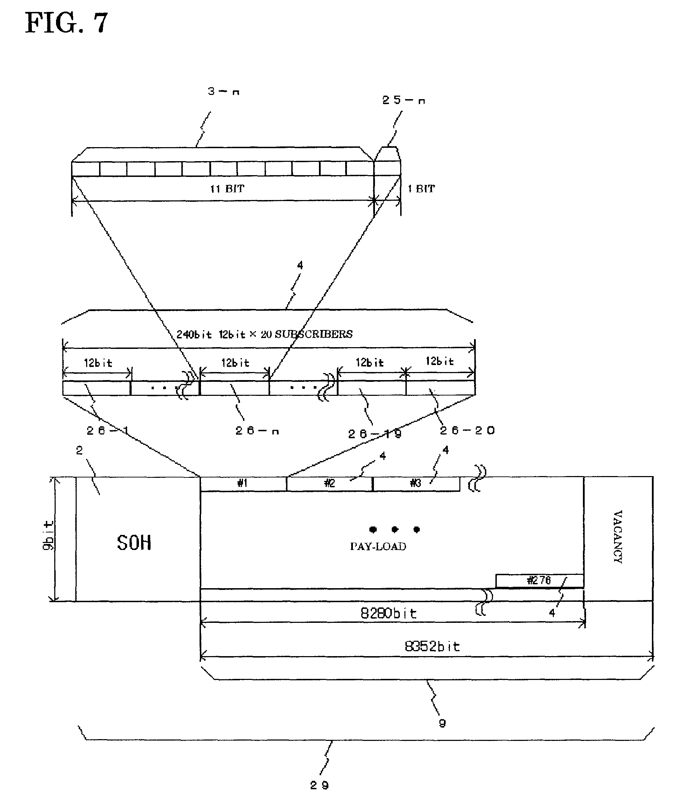

Fig. 7 illustrates a structure of a first multiple signal in the third embodiment.

In the third embodiment, when a sampling digital signal and a control signal are stored into a pay-load, a bit in the control signal associated with the same subscriber is added to the sampling digital signal.

In the third embodiment, the first multiple signal is comprised of the STM-4 frame 29, and stores subscriber service signals associated with 20 subscribers, in an area other than SOH 2.

Each of the subscriber service signals is A/D-converted with a bit solution of 11 bits into a sampling digital signal. A control signal bit 25-n selected from a control signal 5-n associated with a n-th subscriber is added to a sampling digital signal 3-n associated with the n-th subscriber, and resultingly, the sampling digital signal 3-n constitutes 12-bit digital signals 26-n including control signals.

Each of the digital signals 26 for 20 subscribers is multiplexed in a predetermined order. The thus 20 multiplexed digital signals constitute a sampling data block 4. Totally 276 sampling data blocks 4 are stored in an area having a size of vertically 8 bits × horizontally 8280 bits in the STM-4 frame 29.

Accordingly, the subscriber service signal in the third embodiment is A/D-converted at a sampling rate of 2.208 MS/s (276/125 = 2.208).

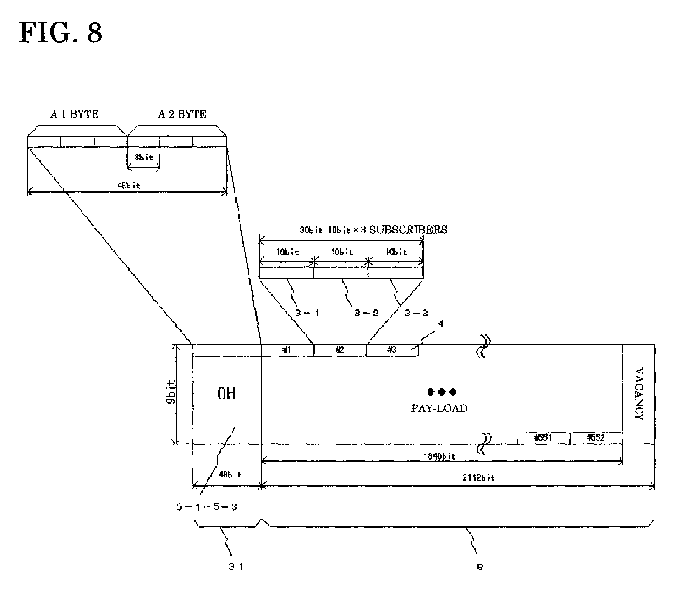

Fig. 8 illustrates a first multiple signal in the fourth embodiment.

In the fourth embodiment, the first multiple signal is comprised of a frame having a structure different from a structure of a frame based on SDH.

The first multiple signal in the fourth embodiment has a transmission rate of 155.52 MHz which is equal to a transmission rate of STM-1, and has a frame having a cycle of 125 μs which is equal to a cycle of STM-1.

The frame has three A1 bytes and three A2 bytes at a head. An area having a size of vertically 9 bits x horizontally 48 bits and including those three A1 bytes and three A2 bytes constitutes an overhead (OH) 31. The A1 and A2 bytes and control signals 5-1, 5-2 and 5-3 are stored in OH 31.

Sampling digital signals obtained by A/D-converting subscriber service signals with a 10-bit solution are stored in an area other than OH 31, having a size of vertically 9 bits × horizontally 2112 bits. The sampling digital signals are stored in the same manner as mentioned above in the first embodiment. That is, the sampling digital signals associated with three subscribers constitute a sampling data block, and 552 sampling data blocks are stored in one frame.

Accordingly, each of the subscriber service signals in the fourth embodiment is A/D-converted at a sampling rate of 4.416 MS/s (552/125 = 4.416).

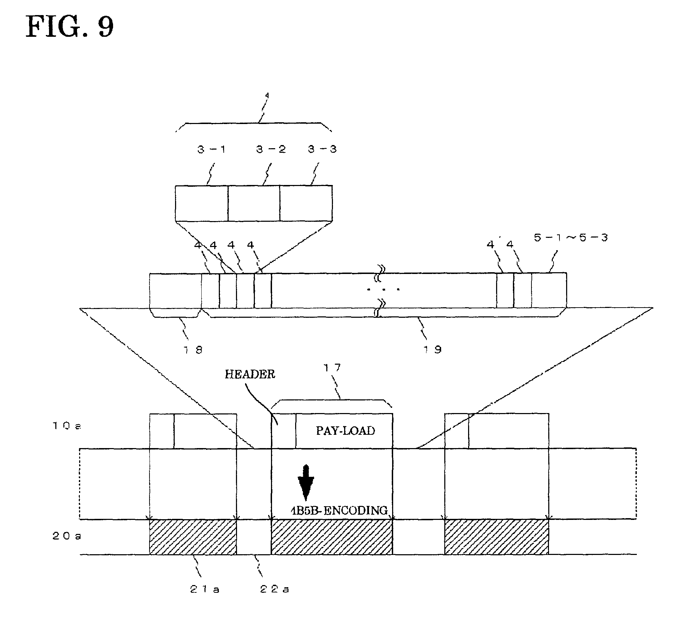

Fig. 9 illustrates a structure of a first multiple signal in the fifth embodiment.

In the fifth embodiment, an Ether packet is used as a first multiple signal 10a, and a second multiple signal is formed by bit-multiplexing the first multiple signal 10a.

The first multiple signal 10a is comprised of a 100-mega Ether packet 17 defined in IEEE 802.3 and having a transmission rate of 100 Mb/s. A pay-load 19 in the 100-mega Ether packet 17 is comprised of a plurality of sampling data blocks 4 coupled to one another. The sampling data blocks 4 are formed by multiplexing sampling digital signals associated with three subscribers, in turn.

Control signals 5-1, 5-2 and 5-3 are all stored in a backmost area in the 100-mega Ether packet 17. In the 100-mega Ether packet 17, an area in which no signals exist exists between packets. It is not always necessary for each of the packets to have the same length.

The first multiple signal 10a having a transmission rate of 100 Mb/s is 4B5B-encoded in accordance with provisions defined in IEEE 802.3. The thus 4B5B-encoded first multiple signal 10a has a transmission rate of 125 Mb/s. With the first multiple signal 10a being 4B5B-encoded, packets in the first multiple signal 10a are turned into encoded packets 21a, and the no-signal area existing between Ether packets is turned into NULL 22a.

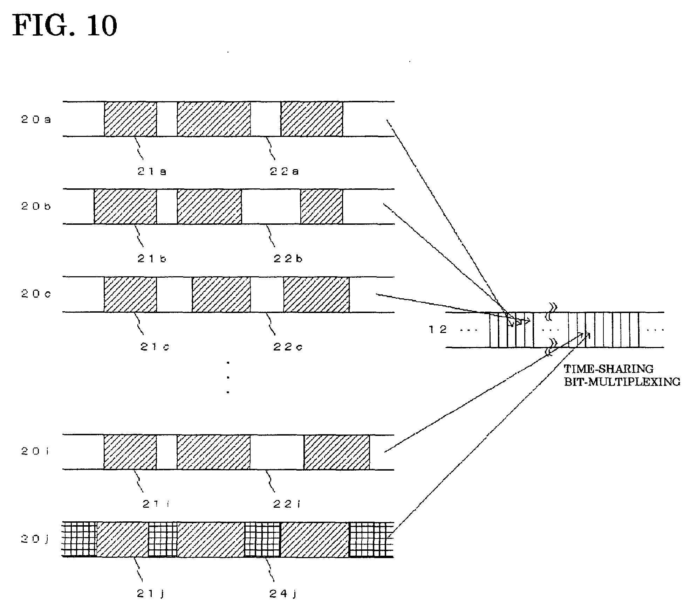

Fig. 10 illustrates a structure of a second multiple signal 12 in the fifth embodiment.

The second multiple signal 12 has a transmission rate of 1.25 Gb/s, and is formed by bit-multiplexing 10 encoded first multiple signals 20a to 20j, similarly to the first embodiment.

In the fifth embodiment, NULL obtained by encoding the no-signal area existing between Ether packets is used as an identifier for identifying the encoded first multiple signals. That is, each of the encoded first multiple signals is comprised of an encoded packet, and NULL indicative of the encoded no-signal state between Ether packets.

The second multiple signal 12 is produced by the steps of inverting a sign of NULL 22j in the tenth encoded first multiple signal 20j, and multiplexing the encoded first multiple signals 20a to 20j in this order by every bit.

When a recipient identifies each of the subscriber service signals out of the received second multiple signal 12, a signal including inverted NULL 22j is judged as the encoded first multiple signal 20j, and other encoded first multiple signals 20a to 20i are identified on the basis of the thus identified first multiple signal 20j.

A specific bit pattern may be used as an identifier in place of the inverted signs. When a specific pattern is used as an identifier, it is possible to insert different identifiers each comprised of a bit pattern different from one another, into the first multiple signals, in place of NULL.

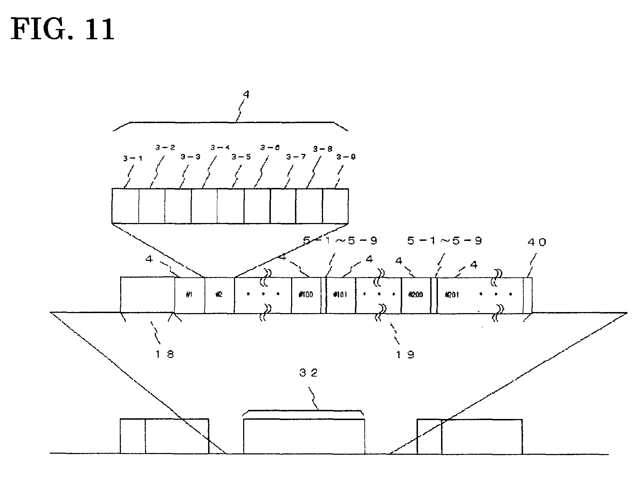

Fig. 11 illustrates a structure of the first multiple signal in the sixth embodiment.

In the sixth embodiment, an Ether packet is used as the first multiple signal. A second multiple signal is produced without encoding the first multiple signal, and then, the second multiple signal is encoded.

The first multiple signal in the sixth embodiment is comprised of a 1-giga Ether packet 32 defined in IEEE 802.3, and has a pay-load 19 storing subscriber service signals associated with nine subscribers. Each of the subscriber service signals is A/D-converted at a sampling rate of 8.832 MS/s with a 12-bit solution into sampling digital signals 3-1 to 3-9. Each of the sampling digital signals is multiplexed in a predetermined order. The thus multiplexed sampling digital signals constitute sampling data blocks 4.

The sampling data blocks 4 are stored into the pay-load 19 such that the pay-load 19 is occupied by the sampling data block 4 from a head. A 12-bit control signal is cyclically inserted into every 100 sampling data blocks 4.

A compensation bit 40 is inserted into the 1-giga Ether packet 32 such that the 1-giga Ether packet 32 has a length equal to a multiple of 8 bits. A state in which no signals exist and which is located between Ether packets has a length equal to a multiple of 8 bits.

The 1-giga Ether packets 32 may be equal in length to one another, or may be different in length from one another.

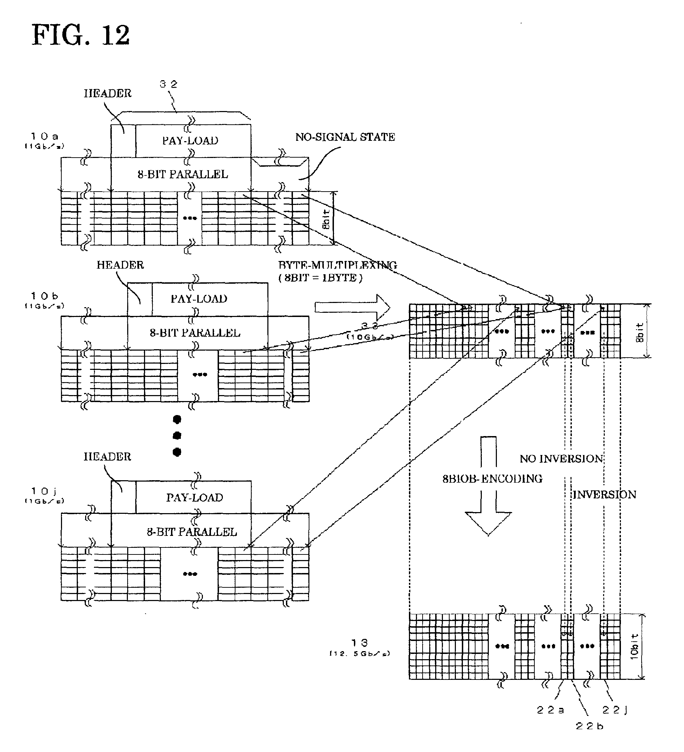

Fig. 12 illustrates a structure of a second multiple signal 12 in the sixth embodiment.

In the sixth embodiment, ten first multiple signals each having a transmission rate of 1 Gb/s are multiplexed into a second multiple signal, which is then 8B10B-encoded. Thus, the encoded second multiple signal has a transmission rate of 12.5 Gb/s.

Each of 1-giga Ether packets 32 in the ten first multiple signals 10a to 10j is developed into 8-bit parallel signals from a head of the packet so as to be 8B10B-encoded. A state in which no signals exist and which is located between Ether packets is also developed into 8-bit parallel signals from a head of the state. Those 8-bit parallel signals are byte-multiplexed in time-sharing in a predetermined order with the signals being kept to be 8-bit parallel, into 8-bit parallel multiple signals 33 having a transmission rate of 10 Gb/s.

After the 8-bit parallel multiple signal 33 has been produced, the second multiple signal is 8B10B-encoded into an encoded second multiple signal 13. When the second multiple signal is 8B10B-encoded, a state in which no signals exist and which is located between Ether packets as well as the 1-giga Ether packet 32 is also 8B10B-encoded into NULL. Only NULL 22j based on the first multiple signal 10j is inverted. The inverted NULL 22j is used as an identifier.

When a signal recipient identifies the first multiple signals 10a to 10j out of the encoded second multiple signal 13, a first multiple signal successively exhibiting a bit pattern of inverted NULL when the encoded second multiple signal 13 is 10B8B-decoded, is judged as the first multiple signal 10j.

The rest of the encoded first multiple signals are identified similarly to the fifth embodiment. In brief, a signal having been multiplexed one signal prior to the first multiple signal 10j is judged as the first multiple signal 10i, and the first multiple signals 10a to 10h are identified in the same manner.

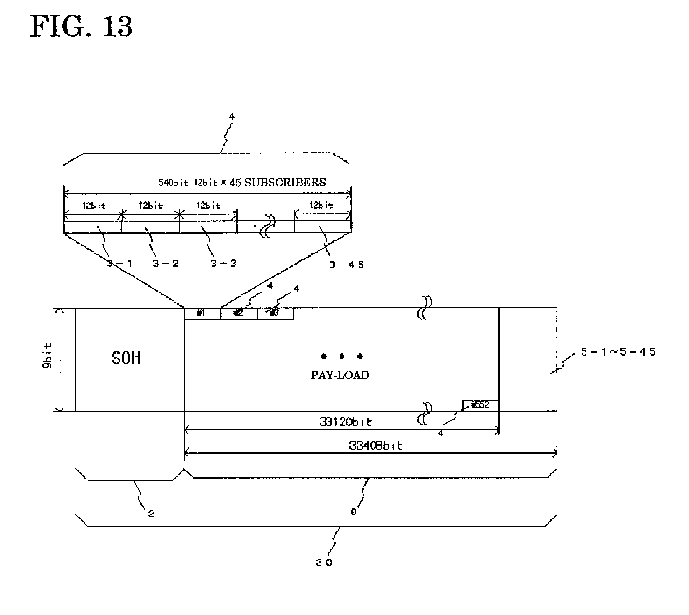

Fig. 13 illustrates a structure of a first multiple signal in the seventh embodiment.

In the seventh embodiment, the first multiple signal is comprised of a STM-16 frame 30. The first multiple signal is transmitted as it is without using a second multiple signal.

The STM-16 frame 30 includes a section overhead (SOH) 2 having a size of vertically 9 bits X horizontally 1152 bits, and hence, subscriber service signals and control signals associated with 45 subscribers are stored into an area other than SOH 2, having a size of vertically 9 bits $\times$ horizontally 33408 bits.

Each of the subscriber service signals is A/D-converted with a 12-bit solution into sampling digital signals. The thus produced sampling digital signals 3-1 to 3-45 associated with 45 subscribers constitute a sampling data block 4. Totally 552 sampling data blocks 4 are stored into an area having a size of vertically 9 bits X horizontally 33120 bits, in the STM-16 frame 30.

Accordingly, each of the subscriber service signals in the seventh embodiment is A/D-converted at a sampling rate of 4.416 MS/s (552/125 = 4.416).

Control signals 5-1 to 5-45 are stored into an area having a size of vertically 9 bits X horizontally 288 bits, other than the above-mentioned area for storing the sampling data blocks 4 therein. Control signals associated with all subscribers are stored in this area.

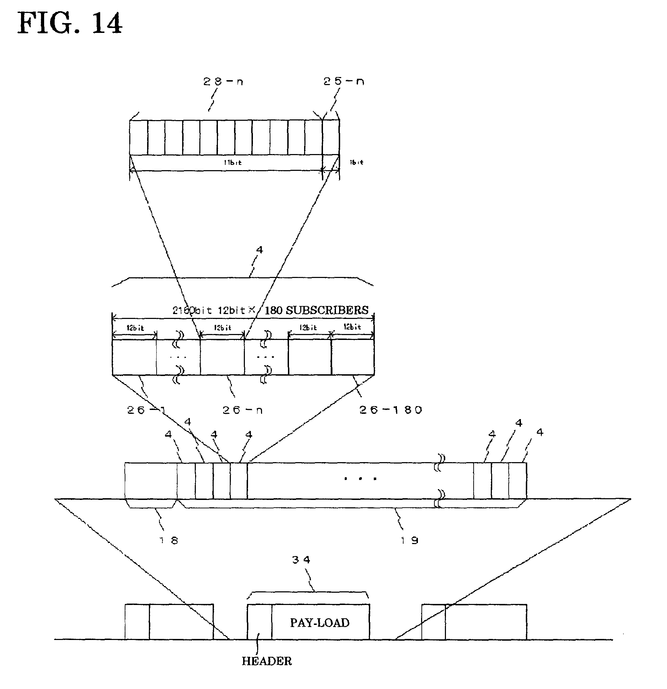

Fig. 14 illustrates a structure of a first multiple signal in the eighth embodiment.

In the eighth embodiment, the first multiple signal is comprised of a 10-giga Ether packet 34 defined in IEEE 802.3. After being 8B10B-encoded, the first multiple signal is transmitted at a transmission rate of 12.5 Gb/s.

The 10-giga Ether packet 34 includes a pay-load 19 in which subscriber service signals and control signals associated with 180 subscribers are stored.

Each of the subscriber service signals is A/D-converted at a sampling rate of 4.416 MS/s with a 11-bit solution into 180 sampling digital signals 3-1 to 3-180. A bit 25-n selected from a control signal associated with a n-th subscriber is added to the sampling digital signal 3-n associated with the n-th subscriber, and resultingly, the sampling digital signal 3-n constitute a 12-bit digital signal 26-n including control signals therein.

Each of the 12-bit digital signals 26-1 to 26-180 associated with 180 subscribers is multiplexed in a predetermined order, and the thus multiplexed digital signals constitute a sampling data block 4.

The sampling data block 4 is stored in the pay-load 19 in the 10-giga Ether packet 34. Each of the 10-giga Ether packets 34 is designed to have a certain length. The 10-giga Ether packets 34 may be equal in length to one another, or may be different in length from one another.

## Claims

1.  A method of carrying out multiplex transmission of a subscriber service signal, comprising the steps of

    (a) converting a subscriber service signal including x digital subscriber line (xDSL) signals, from an analog form to a digital form;
    (b) storing a plurality of thus converted sampling digital signals and control signals into a first multiple signal (10a-10j), and multiplexing in time-sharing a plurality of the thus produced first multiple signals (10a-10j) to thereby produce a second multiple signals (12); and
    (c) transmitting the second multiple signals (12).

2.  The method as set forth in claim 1, further comprising the step (d) encoding the second multiple signals (12), the step (d) being to be carried out between the steps (b) and (c).

3.  The method as set forth in claim 1, wherein the first multiple signal (10a-10j) is encoded in the step (b) before being multiplexed in time-sharing.

4.  The method as set forth in claim 1, 2 or 3, wherein the first multiple signal (10a-10j) has a frame structure including frames arranged in a certain cycle, and wherein a sampling digital signal (3-1 to 3-180) of each of subscribers is assigned a time slot at a predetermined position in the frame, and is always stored in the assigned time slot.

5.  The method as set forth in claim 1, 2 or 3, wherein the first multiple signal (10a-10j) is comprised of a packet comprised of a header and a pay-load (8, 9, 19), and a sampling digital signal (3-1 to 3-180) of each of subscribers is stored into the pay-load (8, 9, 19) in a predetermined order.

6.  The method as set forth in claim 4 or 5, wherein the first multiple signal (10a-10j) is comprised of either a frame comprised of an overhead and a pay-load (8, 9, 19) or a packet comprised of a header and a pay-load (8, 9, 19), and the control signal is stored into a vacancy in the overhead or the header.

7. The method as set forth in claim 4 or 5, wherein the first multiple signal (10a-10j) is comprised of either a frame comprised of an overhead and a pay-load (8, 9, 19) or a packet comprised of a header and a pay-load (8, 9, 19), the control signal is stored together with the sampling digital signal (3-1 to 3-180) into the pay-load (8, 9, 19), and the control signal is periodically inserted into the sampling digital signal (3-1 to 3-180) in the pay-load (8, 9, 19).

8. The method as set forth in claim 4 or 5, wherein the first multiple signal (10a-10j) is comprised of either a frame comprised of an overhead and a pay-load (8, 9, 19) or a packet comprised of a header and a pay-load (8, 9, 19), the control signal is stored together with the sampling digital signal (3-1 to 3-180) into the pay-load (8, 9, 19), and the control signal is stored in the pay-load (8, 9, 19) into successive areas separated from the sampling digital signal (3-1 to 3-180).

9. The method as set forth in claim 4 or 5, wherein the first multiple signal (10a-10j) is comprised of either a frame comprised of an overhead and a pay-load (8, 9, 19) or a packet comprised of a header and a pay-load (8, 9, 19), the control signal is stored together with the sampling digital signal (3-1 to 3-180) into the pay-load (8, 9, 19), and each bit in the control signal is added to a bit in the sampling digital signal (3-1 to 3-180) and is stored into the pay-load (8, 9, 19).

10. The method as set forth in claim 4, wherein the first multiple signal (10a-10j) has the same transmission rate as a transmission rate of STM-1 (1) or STM-4 (29) in synchronous digital hierarchy (SDH).

11. The method as set forth in claim 4, wherein the first multiple signal (10a-10j) uses a frame having a cycle of 125 μs.

12. The method as set forth in claim 4, wherein the first multiple signal (10a-10j) uses A1 byte (1111011) and A2 byte (00101000) used in synchronous digital hierarchy (SDH), as a frame heading byte.

13. The method as set forth in claim 4, wherein the first multiple signal (10a-10j) has a frame having the same structure as a structure of STM-1 (1) or STM-4 (29) in synchronous digital hierarchy (SDH), and the sampling digital signal (3-1 to 3-180) and the control signal are stored into a pay-load (8, 9, 19) in the frame.

14. The method as set forth in claim 4, wherein the subscriber service signal is A/D converted at a sampling rate of 8.832, 4.416 or 2.208 mega-sample/second (MS/s), and at a bit solution of 10, 11 or 12 bits.

15. The method as set forth in claim 5, wherein the first multiple signal (10a-10j) is transmitted at 100 Mb/s, 125 Mb/s, 1Gb/s or 1.25 Gb/s.

16. The method as set forth in claim 5, wherein the first multiple signal (10a-10j) uses an Ether packet defined in IEEE 802.3 LAN.

17. The method as set forth in claim 5, wherein the subscriber service signal is A/D converted at a sampling rate of 8.832, 4.416 or 2.208 mega-sample/second (MS/s), and at a bit solution of 10, 11 or 12 bits.

18. The method as set forth in claim 1, 2 or 3, wherein the second multiple signals (12) has the same transmission rate as a transmission rate of STM-m in synchronous digital hierarchy (SDH) wherein m is an integer equal to or greater than 1.

19. The method as set forth in claim 1, 2 or 3, wherein the second multiple signals (12) uses a frame having a cycle of 125 μs.

20. The method as set forth in claim 1, 2 or 3, wherein the second multiple signals (12) uses A1 byte (1111011) and A2 byte (00101000) used in synchronous digital hierarchy (SDH), as a frame heading byte.

21. The method as set forth in claim 1, 2 or 3, wherein the second multiple signals (12) is based on synchronous digital hierarchy (SDH), and further comprising the step of storing the first multiple signal (10a-10j) based on synchronous digital hierarchy (SDH).

22. The method as set forth in claim 1, 2 or 3, wherein the second multiple signals (12) is produced by bit-multiplexing or byte-multiplexing a plurality of the first multiple signals (10a-10j) in time-sharing, and further comprising the step of inserting an identifier into at least one of the first multiple signals (10a-10j) in order to identify each of the first multiple signals (10a-10j).

23. The method as set forth in claim 1, 2 or 3, wherein the second multiple signals (12) is produced by bit-multiplexing or byte-multiplexing a plurality of the first multiple signals (10a-10j) in time-sharing, and further comprising the step of inverting at least a part of frame synchronization byte of the first multiple signals (10a-10j) in order to identify each of the first multiple signals (10a-10j).

**24.** The method as set forth in claim 1, 2 or 3, wherein the second multiple signals (12) is transmitted at 1Gb/s, 1.25 Gb/s, 10 Gb/s or 12.5 Gb/s.

**25.** The method as set forth in claim 1, 2 or 3, wherein the second multiple signals (12) is produced by bit-multiplexing or byte-multiplexing the first multiple signal (10a-10j) in time-sharing, and further comprising the step of inserting an identifier, in place of NULL indicative of no signal status, into at least one of the first multiple signals (10a-10j) in order to identify each of the first multiple signals (10a-10j).

**26.** A method of carrying out multiplex transmission of a subscriber service signal, comprising the steps of:

(a) converting a subscriber service signal including x digital subscriber line (xDSL) signals, from an analog form to a digital form;
(b) storing a plurality of thus converted sampling digital signal (3-1 to 3-180)s and control signals into a first multiple signal (10a-10j); and
(c) transmitting the first multiple signals (10a-10j).

**27.** The method as set forth in claim 26, wherein the first multiple signal (10a-10j)s (10a-10j) are encoded before transmitted in step (c).

**28.** The method as set forth in claim 26, wherein the first multiple signal (10a-10j) has the same transmission rate as a transmission rate of STM-m in synchronous digital hierarchy (SDH) wherein m is an integer equal to or greater than 1, and includes A1 byte (1111011) and A2 byte (00101000) both having a cycle of 125 μs, at a head of a frame.

**29.** The method as set forth in claim 26, wherein the first multiple signal (10a-10j) uses a frame of STM-m in synchronous digital hierarchy (SDH) wherein m is an integer equal to or greater than 1.

**30.** The method as set forth in claim 26, 27, 28 or 29, wherein the first multiple signal (10a-10j) uses an Ether packet defined in IEEE 802.3 LAN.

**31.** The method as set forth in claim 26, 27, 28 or 29, wherein the first multiple signal (10a-10j) is transmitted at 1Gb/s, 1.25 Gb/s, 10 Gb/s or 12.5 Gb/s.

**32.** A method of carrying out multiplex transmission of a subscriber service signal, comprising the steps of:

(a) converting a subscriber service signal including x digital subscriber line (xDSL) signals terminated by an xDSL modem unit, from an analog form to a digital form;
(b) multiplexing a plurality of thus converted sampling digital signal (3-1 to 3-180)s and control signals; and
(c) transmitting the signals,

the subscriber service signal being converted from an analog form to a digital form at a first sampling rate,
a ratio between the first sampling rate and a sampling rate of the xDSL modem unit being equal to an integer.

**33.** The method as set forth in claim 32, wherein the first sampling rate is equal to 1.104 MS/s multiplied by an integer.

# FIG. 1
## PRIOR ART

# FIG. 2

# FIG. 3

30bit 10bit × 3SUBSRIBERS

10bit    10bit    10bit

3 − 1    3 − 2    3 − 3

5 − 1 ～ 5 − 3

#1   #2   ...   #23   #24

9bit

SOH   POH   PAY-LOAD   VACANCY

#552

1848bit

2080bit

5 − 1 ～ 5 − 3

# FIG. 4

SOH, POH

PAY-LOAD

TIME-SHARING
BIT-MULTI PLEXING

INVERSION

# FIG. 5

60bit 12bit × 5 SUBSCRIBER

| 12bit | 12bit | 12bit | 12bit | 12bit |

3-1  3-2  3-3  3-4  3-5

2

9bit

SOH

#1
#139
#277
#415
#553
#691
#829
#967

PAY-LOAD

#139
#276
#414
#552
#690
#828
#966
#1104

VACANCY

4

5-1~5-5

8280bit

8352bit

9

20

## FIG. 6

( 8BIT = 1BYTE )

# FIG. 7

# FIG. 8

FIG. 9

HEADER

PAY-LOAD

4B5B-ENCODING

# FIG. 10

20 a

21 a  22 a

20 b

21 b  22 b

20 c

21 c  22 c

20 i

21 i  22 i

20 j

21 j  24 j

12 ...

TIME-SHARING
BIT-MULTIPLEXING

# FIG. 11

# FIG. 12

# FIG. 13

540bit 12bit × 45 SUBSCRIBERS

12bit 12bit 12bit 12bit

3 — 1    3 — 2    3 — 3    3 — 4 5

#1 #2 #3

9bit

SOH

PAY-LOAD

5 — 1 ~ 5 — 4 5

#552

33120bit

33408bit

2

9

30

## FIG. 14

PAY-LOAD

HEADER